# EUROPÄISCHE PATENTANMELDUNG

(11) **EP 4 311 653 A2**
(43) Veröffentlichungstag der Anmeldung: **31.01.2024**
(21) Anmeldenummer: 23183212.2
(22) Anmeldetag: 04.07.2023
(51) Int. Cl.: B29C 49/42, B29C 49/36

(54) **BLASFORMANLAGENANORDNUNG SOWIE BLASFORMANLAGE**

(30) Priorität: 26.07.2022 DE 102022118647
(71) Anmelder: KHS GmbH, 44143 Dortmund (DE)
(72) Erfinder: Klöpper, Gerhard, 22391 Hamburg (DE); Lewin, Frank, 22889 Tangstedt (DE); Klatt, Dieter, 22147 Hamburg (DE)

(57) **Zusammenfassung**

Die Erfindung betrifft eine Blasformanlagenanordnung für eine Blasformanlage mit zumindest einer Behältertransporteinrichtung, welche eine Vielzahl umlaufend angeordneter Transportelemente (10) zur Aufnahme von Behältern (2) aufweist, welche in einer Transportrichtung (T) entlang einer Transportstrecke (9) bewegbar angeordnet sind und wobei in Transportrichtung (T) ein Übergabeabschnitt (8) an die Transportstrecke (9) anschließt, wobei eine Übergabeeinrichtung (7) dazu eingerichtet ist, die Behälter (2) in dem Übergabeabschnitt (8) aus den Transportelementen (10) zu entnehmen. Erfindungsgemäß ist ein Abstreifelement (14) in Transportrichtung (T) hinter dem Übergabeabschnitt (8) angeordnet.

## Beschreibung

Die vorliegende Erfindung betrifft eine Blasformanlagenanordnung für eine Blasformanlage mit zumindest einer Behältertransporteinrichtung, welche eine Vielzahl umlaufend angeordneter Transportelemente zur Aufnahme von Behältern aufweist, welche in einer Transportrichtung entlang einer Transportstrecke bewegbar angeordnet sind und wobei in Transportrichtung ein Übergabeabschnitt an die Transportstrecke anschließt, wobei eine Übergabeeinrichtung dazu eingerichtet ist, die Behälter in dem Übergabeabschnitt aus den Transportelementen zu entnehmen.

Derartige Blasformanlagenanordnungen beziehen sich auf einzelne Komponenten oder aber auch auf Anordnungen von Komponenten in Blasformanlagen, wobei es sich im Rahmen der Erfindung insbesondere um Blasformanlagen für die Getränkeindustrie handelt. Insofern dienen die Blasformanlagen dazu, aus Vorformlingen, welche in der Regel auch als Preforms bezeichnet werden, Getränkebehälter, insbesondere Flaschen, zu formen. Es versteht sich, dass diese Vorformlinge üblicherweise aus einem Kunststoff, z. B. Polyethylenterephthalat (PET), gebildet sind, sodass diese im Rahmen der Blasumformung in einfacher Art und Weise plastisch verformt werden können.

Die Vorformlinge werden hierzu zunächst auf eine vorbestimmte Temperatur aufgeheizt, welche eine plastische Verformung ermöglicht. Sodann wird eine sogenannte Reckstange in die Vorformlinge eingeführt, welche die Länge der Vorformlinge vergrößert. Durch Einblasen von Druckluft wird sodann der Innenraum der Vorformlinge mit Druck beaufschlagt, wobei die Wände in eine anliegende Blasform hineingedrückt werden. Sodann können die herausgebildeten Behälter aus der Blasform entnommen werden.

Wenngleich im Rahmen der Erfindung sowohl die Vorformlinge als auch die fertig herausgebildeten Getränkebehälter als Behälter verstanden werden können, so handelt es sich bevorzugt um Vorformlinge, welche vor dem Einbringen in die eigentliche Blasmaschine über die Behältertransporteinrichtung transportiert werden.

Hierbei hat sich in der Praxis gezeigt, dass es oftmals ein Problem für die Behältertransportvorrichtungen darstellt, wenn die Behälter bzw. die Vorformlinge nicht in dem Übergabeabschnitt von der Übergabeeinrichtung aus den Transportelementen entnommen werden können. Dies kann beispielsweise dann der Fall sein, wenn die Übergabeeinrichtung im Laufe des Betriebes nicht mehr exakt mit der Behältertransporteinrichtung synchronisiert ist. Heutzutage werden die einzelnen Anlagenkomponenten üblicherweise über unabhängige Elektromotoren, insbesondere Servomotoren, angetrieben, sodass die einzelnen Anlagenkomponenten nicht mehr miteinander zwangsgekoppelt sind. Geringfügige Ungenauigkeiten im Betrieb der Elektromotoren können dann zu einer entsprechenden Asynchronität führen. Je nach Ausgestaltung der Behältertransporteinrichtung können die nicht entnommen Behälter dann die Aufnahme von neuen Behältern blockieren oder sogar bei einem Weitertransport mit Bauteilen der Blasformanlagenanordnung kollidieren.

Vor diesem Hintergrund liegt der vorliegenden Erfindung die Aufgabe zugrunde, eine Blasformanlagenanordnung anzugeben, welche sich gegenüber den bislang bekannten Blasformanlagenanordnungen durch ein verbessertes Betriebsverhalten und eine höhere Zuverlässigkeit auszeichnet. Zugleich sollen auch etwaige Ausfallzeiten reduziert werden.

Gegenstand und Lösung dieser Aufgabe ist eine Blasformanlagenanordnung gemäß Patentanspruch 1. Dementsprechend ist ein Abstreifelement in Transportrichtung hinter dem Übergabeabschnitt angeordnet. Dieses Abstreifelement ist dazu vorgesehen, Behälter, welche nicht durch die Übergabeeinrichtung in dem Übergabeabschnitt aus den Transportelementen entnommen wurden, in zuverlässiger Art und Weise zu entfernen, wodurch sichergestellt wird, dass durch das nunmehr freiliegende Transportelement erneut ein Behälter entlang der Transportstrecke transportiert werden kann.

Demnach handelt es sich bei dem Abstreifelement um eine Art Absicherung, welche im Fall einer nicht einwandfrei funktionierenden Übergabeeinrichtung eine Entnahme der Behälter sicherstellt. Beispielsweise ist es so möglich, bei einer z. B. leicht beschädigten oder fehlerhaften Übergabeeinrichtung einen Fortbetrieb der Blasformanlagenanordnung für einen bestimmten Zeitabschnitt zu ermöglichen. Auch bei einem vollständigen Ausfall der Übergabeeinrichtung, z. B. infolge einer Asynchronität kann sichergestellt werden, dass die Behälter nicht an Bauteile, z. B. an eine Trennwand der Behältertransporteinrichtung, anschlagen und diese beschädigen.

Gemäß einer bevorzugten Ausgestaltung weist die Behältertransporteinrichtung eine Vorrichtung auf, welche dazu eingerichtet ist, die Transportelemente in dem Übergabeabschnitt ausgehend von einer Betriebsstellung in einer senkrecht zur Transportrichtung angeordneten Hubrichtung zu bewegen. Dementsprechend werden die Transportelemente zunächst entlang der Transportstrecke in einer Betriebsstellung bewegt und sodann über die Hubvorrichtung in die Übergabestellung überführt. Dies hat den Vorteil, dass die Transportelemente zunächst aus der Reihe hintereinander angeordneter Transportelemente herausgeführt werden können und sodann die Übergabeeinrichtung die Behälter in den Transportelementen in einfacher Art und Weise entnehmen kann, ohne mit weiteren Behältern oder Transportelementen zu kollidieren. Gemäß einer üblichen Ausgestaltung werden die Transportelemente von der Betriebsstellung nach unten in die Übergabestellung bewegt. Mithilfe dieser Hubbewegung ist es dann möglich, in einfacher Art und Weise ein Lösen von Behältern an dem Abstreifelement zu ermöglichen. Hierzu sind die Behälter unterhalb des Abstreifelements angeordnet, wobei beispielsweise das Abstreifelement so ausgebildet ist, dass im Zuge eines Weitertransportes der Behälter an dem Abstreifelement anschlägt und hierdurch gelöst wird.

Besonders bevorzugt ist vorgesehen, dass das Abstreifelement dazu eingerichtet ist, die Behälter aus den Transportelementen im Zuge einer Bewegung entgegen der Hubrichtung zu lösen. Hierbei ist zu beachten, dass die Transportelemente in dem Übergabeabschnitt in Hubrichtung in die Übergabestellung überführt werden. Hinter dem Übergabeabschnitt erfolgt sodann eine entgegen gerichtete Hubbewegung, welche die Transportelemente zurück in die Betriebsstellung überführt und die Aufnahme von neuen Behältern ermöglicht. Diese gegenläufige Hubbewegung bewirkt sodann ein Lösen der Behälter an dem Abstreifelement, indem Abschnitte des Behälters an dem Abstreifelement anschlagen und ein Lösen vom Transportelement bewirken. In diesem Zusammenhang ist auf die übliche Ausgestaltung von Vorformlingen oder dergleichen hinzuweisen, welche üblicherweise in einem Kopfabschnitt fertig ausgebildet sind. Dieser Kopfabschnitt weist dementsprechend ein Außengewinde zum Aufschrauben von Verschlusskappen auf. Unterhalb des Gewindes steht darüber hinaus ein sogenannter Stützring vor, welcher die größte Breitenausdehnung des Vorformlings darstellt und somit in besonderer Weise dafür geeignet ist, um mit dem Abstreifelement in Anlage gebracht zu werden.

Dementsprechend ist sicherzustellen, dass die Hubeinrichtung in jedem Fall eine ausreichende Hubbewegung durchführt, welche es ermöglicht, den Stützring unterhalb des Abstreifelementes anzuordnen, sodass dann in einer daran anschließenden entgegengesetzten Hubbewegung ein Anschlag des Stützringes an dem Abstreifelement und folglich das Lösen des Behälters erfolgt. Gemäß einer bevorzugten Ausgestaltung ist daher die Hubeinrichtung dazu eingerichtet, die Transportelemente in dem Übergabeabschnitt zumindest entlang eines Grundhubes zu bewegen, wobei der Grundhub zumindest 8 mm, bevorzugt zumindest 9 mm, besonders bevorzugt zumindest 10 mm, beträgt. Dieser Grundhub reicht hierbei einerseits aus, um die Stützringe der Behälter unterhalb des Abstreifelementes zu positionieren und zugleich einen ausreichenden Hub in die entgegengesetzte Richtung zu ermöglichen, die ein Lösen der Behälter aus den Transportelementen ermöglicht. Dieser Grundhub stellt somit eine untere Grenze dar, welche im Betrieb der Behältertransporteinrichtung nicht unterschritten werden darf.

Allerdings sieht eine besonders bevorzugte Ausgestaltung vor, dass der Hubeinrichtung eine Stelleinrichtung zur Einstellung des Hubes zugeordnet ist. Mithilfe dieser Stelleinrichtung kann die Hubeinrichtung verstellt werden bzw. zwischen verschiedenen Hüben gewählt werden. Bevorzugt ist die Stelleinrichtung dazu eingerichtet, die Hubeinrichtung zwischen zumindest zwei Hubstellungen zu verstellen. Eine erste Hubeinstellung bewirkt hierbei vorzugsweise, dass die Transportelemente von einer Betriebsstellung in die Übergabestellung überführt werden, während die zweite Hubstellung lediglich einen Grundhub bewirkt. Entsprechend ist bei einer solchen Ausgestaltung der Hub für ein Überführen in die Übergabestellung größer als der Grundhub, wobei das Verhältnis bevorzugt zumindest 2:1, besonders bevorzugt zumindest 2,5:1, beträgt. Ein Umschalten zwischen diesen beiden Hubstellungen kann beispielsweise auf Basis einer Fehlerdetektion beruhen. Wird der Stelleinrichtung beispielsweise mitgeteilt, dass die Behältertransporteinrichtung und die Übergabeeinrichtung nicht länger synchron zueinander verlaufen, so kann dann von einer ersten in eine zweite Hubstellung gewechselt werden. In einem solchen Fall könnte zwar die Übergabeeinrichtung nicht länger Behälter aus den Transportelementen entnehmen. Allerdings wäre sichergestellt, dass in jedem Falle ein Entfernen aus den Transportelementen für einen gewissen Zeitraum erfolgen würde, wobei dieser Zeitraum dann dazu benutzt werden könnte, die Blasformanlage vom Betrieb zu nehmen.

Eine bevorzugte Weiterbildung sieht vor, dass die Hubeinrichtung als Kurvensteuerung ausgebildet ist. Gemäß einer solchen Ausgestaltung kann die Hubbewegung allein durch die Ausgestaltung der Kurvensteuerung bewirkt werden. Die Transportelemente weisen hierzu bevorzugt an einem oberen Ende eine Führungsrollenanordnung auf, welche in Transportrichtung entlang einer zugeordneten Führungsbahnanordnung abrollbar ist. Im Übergabeabschnitt weist die Führungsbahnordnung einen Bahnverlauf auf, welcher eine Bewegung der Transportelemente in Hubrichtung und hinter dem Übergabeabschnitt eine Bewegung entgegen der Hubrichtung bewirkt. Die Führungsrollenanordnung kann darüber hinaus vorzugsweise in Hubrichtung durch die Stelleinrichtung verstellt werden, sodass dann die Führungsrollenanordnung nicht mehr den maximal möglichen Hub bewirkt. Hierdurch kann zwischen dem Grundhub und einem Hub zum Überführen in die Übergabestellung geschaltet werden.

Eine Weiterbildung sieht ferner vor, dass die Führungsrollenanordnung aus zumindest zwei Führungsrollen und die Führungsbahnordnung aus zumindest zwei Führungsbahnen gebildet ist, wobei eine erste Führungsbahn einen über die Stelleinrichtung in Hubrichtung verstellbaren Bahnabschnitt aufweist. Jede der Führungsrollen ist somit entlang einer zugeordneten Führungsbahn geführt, wobei die Führungsrollen in Wirkstellung bevorzugt unterhalb einer Führungsbahn abrollbar sind. Je nach Schaltzustand steht entweder die erste oder die zweite Führungsbahn in Wirkstellung und damit im Übergabeabschnitt in Hubrichtung vor. Hierdurch bildet dann die jeweilige Führungsbahn den für den jeweiligen Hub wirksamen Bahnverlauf. Die erste Führungsbahn weist darüber hinaus einen einstellbaren Bahnabschnitt im Übergabeabschnitt auf, so dass dieser entweder in einem ersten Schaltzustand gegenüber der zweiten Führungsbahn vorsteht oder in einem zweiten Schaltzustand gegenüber der zweiten Führungsbahn zurückversetzt ist. Der erste Schaltzustand bewirkt hierbei bevorzugt den Hub zum Überführen der Transportelemente in die Übergabestellung und der zweite Schaltzustand einen Grundhub.

Bevorzugt ist darüber hinaus die Transporteinrichtung als Heizvorrichtung ausgebildet ist. In einem solchen Fall ist das an die Übergabeeinrichtung anschlagende Material nochmals deutlich weicher.

Eine bevorzugte Ausgestaltung sieht ferner vor, dass das Abstreifelement zunächst abschnittsweise kurvenförmig ausgebildet ist. Hierbei handelt es sich bevorzugt um eine Ausgestaltung, bei der das Abstreifelement in einem Endabschnitt nach unten abfällt. Hierdurch ist es möglich, den in den Transportelementen transportierten Behältern nach dem Lösen in dem Abstreifelement einen gewissen nach unten gerichteten Impuls zu verleihen, der sicherstellt, dass der Behälter nach dem Lösen möglichst schnell nach unten fallen und aufgrund der Bewegung in Transportrichtung nicht an dahinterliegende Elemente oder Bauteile anschlagen.

Wie bereits zuvor angedeutet, sieht eine Weiterbildung der Erfindung vor, dass die Behältertransporteinrichtung als Heizvorrichtung ausgebildet ist, wobei zumindest abschnittsweise entlang der Transportstrecke Heizelemente angeordnet sind. Eine derartige Heizvorrichtung ist in Blasformanlagen üblicherweise dazu vorgesehen, um das Material der Behälter bzw. der Vorformlinge auf eine Temperatur zu bringen, die eine plastische Verformung ermöglicht. Die Heizelemente sind hierbei zumindest abschnittsweise entlang der Transportstrecke angeordnet und bewirken ein sukzessives Aufheizen der entlangfahrenden Behälter. Üblicherweise sind die Heizelemente als Wärmestrahlelemente ausgebildet und bewirken demnach eine Aufheizung der Behälter im Wesentlichen auf Basis von einwirkender Wärmestrahlung. Bevorzugt handelt es sich bei den Heizelementen um Infrarotstrahlelemente.

Ausgehend von einer solchen Ausgestaltung weisen die Transportelemente bevorzugt Abschirmelemente auf, welche in einem betriebsgemäßen Zustand in einem Kopfbereich der Behälter angeordnet sind und bewirken, dass die Strahlung unterhalb des Abstrahlelementes gehalten wird. Hierdurch soll eine unerwünschte Aufheizung der Maschinenbauteile vermieden werden. Andererseits soll auch sichergestellt werden, dass der Kopfbereich der Behälter bzw. Vorformlinge, welcher üblicherweise bereits mit einem Außengewinde zum Aufschrauben einer Verschlusskappe ausgebildet ist, nicht aufweicht. Vielmehr soll die Strahlung im unteren Bereich der Vorformlinge gehalten werden, in dem eine Aufweichung und entsprechend auch eine plastische Verformung gewünscht ist.

Unabhängig vom Hub der Transportelemente sind die Abstrahlelemente stets oberhalb des Abstreifelementes angeordnet. Auch im Hinblick auf diese Abstrahlelemente weist die vorliegende Erfindung deutliche Vorteile gegenüber bisherigen Lösungen auf. Sofern beispielsweise der entsprechende Behälter nicht aus dem Transportelement entnommen werden kann, führt dies in einem nächsten Schritt zu einer Kollision mit einer dahinter angeordneten Trennwand, welche erforderlich ist, um den kalten Einlauf von dem heißen Auslauf der Heizvorrichtung zu trennen. Eine Kollision mit dieser Trennwand führt allerdings unweigerlich auch zu einem Verbiegen der Abstrahlelemente, da die Behälter - wie bereits zuvor erläutert - mit einem Kopfbereich innerhalb dieser Abstrahlelemente angeordnet sind. Bislang wurden ausschließlich Notausschalter an der Trennwand angeordnet, welche im Falle einer Kollision mit dem Behälter ein Ausschalten der gesamten Anlage bewirken. Mit der Erfindung ist nunmehr zum einen zumindest vorläufig ein weiterer Betrieb möglich. Zum anderen werden die Behälter auch rechtzeitig aus den Transportelementen entnommen, bevor eine Beschädigung von weiteren Bauteilen, z.B. Abstrahlelementen, erfolgen kann.

Gemäß einer bevorzugten Ausgestaltung der Erfindung kann aber auch hier zumindest ein Notausschalter an einer hinter dem Abstreifelement angeordneten Trennwand angeordnet sein, welcher dazu eingerichtet ist, dass ein in dem Transportelement beförderter Behälter an diesem Notausschalter anschlägt. Der Schalter kann beispielsweise als Näherungsschalter ausgebildet sein. Dementsprechend ist eine weitere Sicherheitsschranke vorgesehen, welche im Falle eines nicht ordnungsgemäß funktionierenden Abstreifelementes in letzter Konsequenz eine Abschaltung der gesamten Anlage bewirkt.

Gemäß einer bevorzugten Ausgestaltung der Erfindung weist die Übergabeeinrichtung einen oder mehrere Greifer auf, welche dazu eingerichtet sind, die Behälter in dem Übergabeabschnitt zu greifen. Bevorzugt handelt es sich um mehrere Greifer, welche in Umfangsrichtung an einem rotierbar angetriebenen Grundkörper der Übergabeeinrichtung angeordnet sind. Folglich bildet sich eine Art Transportstern aus, wobei die einzelnen Behälter jeweils über einen Greifer gehalten werden. Es versteht sich hierbei von selbst, dass die Greifer unterschiedlich ausgestaltet werden können. Eine bevorzugte Ausgestaltung sieht in diesem Zusammenhang vor, dass jeder Greifer aus zwei Greiferteilen gebildet ist, welche zusammenwirkend die Behälter außenanliegend greifen. Die Hubeinrichtung ist in diesem Zusammenhang bevorzugt so eingerichtet, dass die Greifer die Behälter in einem Kopfbereich greifen. Entsprechend bewirkt der Übergabehub in der Übergabestellung der Transportelemente, dass die Greifer die Behälter im Kopfbereich greifen und entnehmen können.

Eine bevorzugte Weiterbildung sieht vor, dass der Behältertransporteinrichtung zum Transport der Transportelemente in Transportrichtung und/oder der Übergabeeinrichtung eine Antriebseinrichtung zugeordnet ist. Besonders bevorzugt weisen beide Einrichtungen jeweils eine separate Antriebseinrichtung auf. Dies bedeutet, dass beide Einrichtungen nicht durch eine Getriebeanordnung miteinander zwangsgekoppelt sind. Insbesondere sieht die Erfindung vor, dass die Antriebseinrichtungen als Elektromotor, insbesondere als Servomotor, ausgebildet sind. Entsprechend werden beide Antriebseinrichtungen separat von einer Steuervorrichtung angesteuert und treiben unabhängig voneinander die Behältertransporteinrichtung und die Übergabeeinrichtung an. Allerdings müssen die Bewegungen beider Einrichtungen miteinander synchronisiert werden, damit die Greifer der Übergabeeinrichtung die Behälter aus der Behältertransporteinrichtung an geeigneter Stelle entnehmen können. Gerade im Fall einer gewissen Asynchronität ist die erfindungsgemäße Ausgestaltung mit einem Abstreifelement von besonderer Bedeutung.

Gegenstand der Erfindung ist ferner eine Blasformanlage gemäß Patentanspruch 14 mit einer erfindungsgemäßen Blasformanlagenanordnung, wobei eine Blasmaschine der Behältertransporteinrichtung in Produktionsrichtung nachgeschaltet ist und wobei eine Übergabeeinrichtung zur Übergabe der Behälter zwischen der Behältertransporteinrichtung und der Blasmaschine angeordnet ist. Bei der Blasmaschine handelt es sich in diesem Zusammenhang um die Maschine, welche eine plastische Verformung der in der Behältertransportmaschine transportierten Behälter bewirkt.

Sofern es sich bei der Behältertransporteinrichtung um eine Heizvorrichtung handelt, so erfolgt in dieser zunächst eine Aufheizung und Aufweichung der in der Behältertransporteinrichtung transportierten Behälter in Form der Vorformlinge, wobei sodann die Übergabeeinrichtung die aufgeheizten und aufgeweichten Vorformlinge in die Blasformanlage übergibt. In dieser Blasformanlage werden die Vorformlinge dann von einer Blasform umschlossen und mittels Einblasen von Druck plastisch verformt.

Im Folgenden wird die Erfindung anhand von Ausführungsbeispielen näher erläutert. Es zeigen:
- Fig. 1: eine schematische Darstellung einer erfindungsgemäßen Blasformanlage;
- Fig. 2: einen Ausschnitt aus einer Behältertransporteinrichtung für eine Blasformanlagenanordnung gemäß der Fig. 1 in Übergabestellung;
- Fig. 3: den Ausschnitt gemäß der Fig. 2 hinter dem Übergabeabschnitt;
- Fig. 4: eine schematische Darstellung der Hubeinrichtung
- Fig. 5: den Ausschnitt gemäß der Fig. 2 in einem Grundhub;
- Fig. 6: ein Ausschnitt der Hubeinrichtung mit Stelleinrichtung
- Fig. 7: eine schematische Darstellung der Stelleinrichtung
- Fig. 8: den Ausschnitt gemäß der Fig. 2 in einer seitlichen Darstellung.

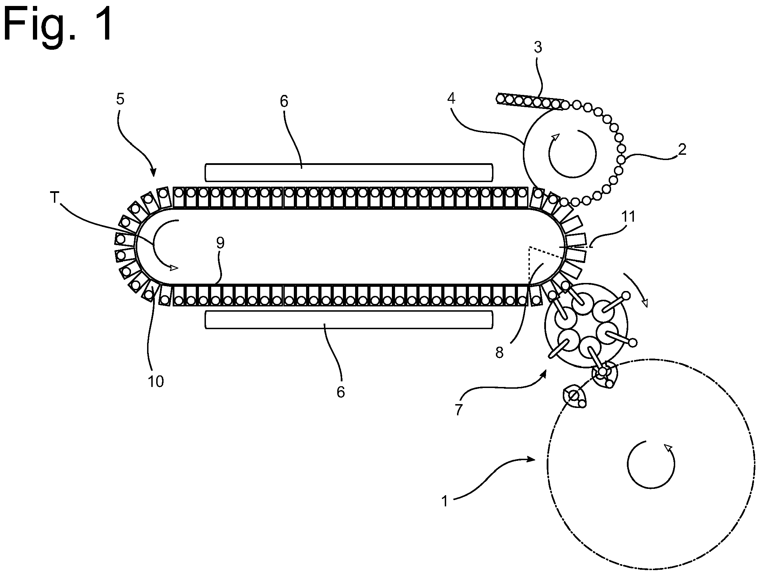

Die Fig. 1 zeigt eine erfindungsgemäße Blasformanlage mit einer Blasmaschine 1, welche dazu eingerichtet ist, als Vorformlinge ausgebildete Behälter 2 aufzunehmen und zu Kunststoffflaschen auszubilden. Die Behälter 2 sind vor diesem Hintergrund aus einem plastisch verformbaren Material ausgebildet. Insbesondere handelt sich hierbei um Vorformlinge aus Polyethylenterephthalat (PET).

Die Behälter 2 werden der Blasformanlage über eine üblicherweise als Rutsche ausgebildete Zuführung 3 zugeführt und mittels Vereinzelungsrad 4 an eine als Heizvorrichtung ausgebildete Behältertransportanordnung 5 übergeben. Innerhalb der als Heizvorrichtung ausgebildeten Behältertransporteinrichtung 5 werden die Behälter 2 um laufend entlang einer Transportstrecke 9 bewegt, wobei Heizelemente 6 die Behälter 2 kontinuierlich auf eine Temperatur aufheizen, die eine plastische Verformung durch Einbringen eines Hochdruckes innerhalb der Blasmaschine 1 ermöglicht.

Folglich weicht das Material der Behälter 2 mit zunehmender Temperatur auf, wodurch es sich dann leichter verformen lässt. Die Heizelemente 6 sind gemäß der Fig. 1 als Wärmestrahlelemente ausgebildet und heizen die Behälter 2 durch Wärmestrahlung im Infrarotbereich auf.

Während das Vereinzelungsrad 4 die Behälter 2 der Behältertransporteinrichtung 5 zuführt, ist eine Übergabeeinrichtung 7 dazu eingerichtet, die aufgeheizten Behälter 2 in einem Übergabeabschnitt 8 der Transportstrecke 9 der Behältertransporteinrichtung 5 zu entnehmen und an die Blasmaschine 1 zu übergeben. Üblicherweise weist die Übergabeeinrichtung 7 hierzu mehrere Greifer auf, welche an einem Grundkörper der Übergabeeinrichtung 7 angeordnet sind und wobei durch Rotation der Übergabeeinrichtung 7 die Überführung der Behälter 2 an die Blasmaschine 1 ermöglicht wird.

Hierbei hat sich in der Praxis gezeigt, dass aus verschiedenen Gründen eine Entnahme der Behälter 2 aus der Transportstrecke 9 nicht in jedem Fall gewährleistet werden kann. Beispielsweise weisen sowohl die Behältertransporteinrichtung 5 als auch die Übergabeeinrichtung 7 eine separate als Servomotor ausgebildete Antriebseinrichtung auf, wobei die Bewegung der beiden Komponenten exakt aufeinander abgestimmt sein muss. Sofern eine gewisse Asynchronität vorliegt, kann dies dazu führen, dass die Greifer der Übergabeeinrichtung 7 die Behälter 2 nicht mehr exakt greifen, sodass infolgedessen die Behälter 2 in den Transportelementen 10 der Behältertransporteinrichtung 5 verbleiben und beispielsweise an eine Trennwand 11 anschlagen, welche hinter dem Übergabeabschnitt 8 angeordnet ist und welche den kalten Einlauf der Behältertransporteinrichtung 5 von dem heißen Auslauf trennt. Dies kann zur Beschädigung verschiedener Bauteile führen. Eine andere Problematik ergibt sich, wenn beispielsweise ein Greifer der Übergabeeinrichtung 7 beschädigt und aus diesem Grunde eine Entnahme der Behälter 2 aus dem jeweiligen Transportelement 10 nicht möglich ist.

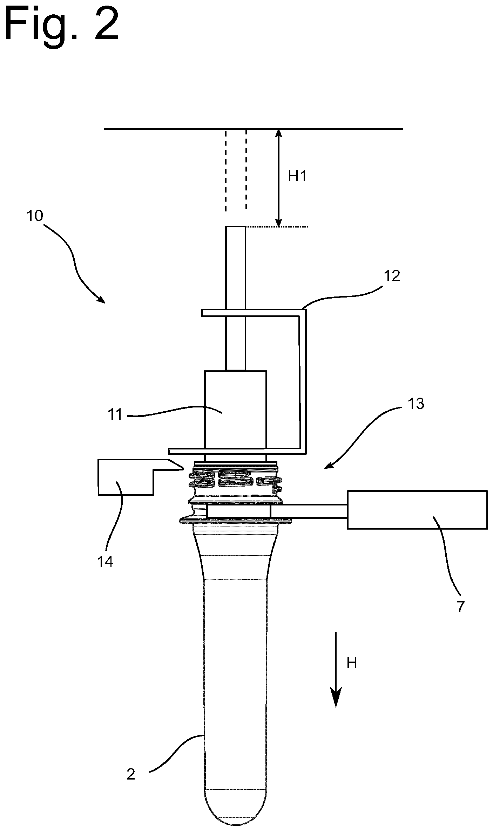

Die Fig. 2 zeigt in diesem Zusammenhang eine nähere Darstellung eines Transportelementes 10 im Bereich des Übergabeabschnittes 8. Der Behälter 2 ist innerhalb des Transportelementes 10 von einem Halteelement 11 gehalten. Darüber hinaus befindet sich ein sogenanntes Abschirmelement 12 oberhalb des Behälters 2 und verhindert hierdurch, dass die Wärmestrahlung den Kopfbereich 13 des Behälters 2 erreicht. Dieser Kopfbereich 13 ist bereits fertig mit einem Außengewinde ausgebildet, welches die Aufnahme einer Verschlusskappe ermöglicht. Darüber hinaus soll mit diesem Abschirmelement 12 verhindert werden, dass Wärme auch nach außen dringt.

Gemäß der Fig. 2 wird an dieser Stelle keine Wärmestrahlung mehr eingebracht, sodass gemäß der Stellung in der Fig. 2 das Abstrahlelement 12 vollständig oberhalb des Behälters 2 angeordnet ist.

Aus der Fig. 2 wird ferner deutlich, dass die Behältertransporteinrichtung 5 eine Hubvorrichtung aufweist, welche dazu eingerichtet ist, die Transportelemente 10 in dem Übergabeabschnitt 8 hubbeweglich zu bewegen. Hierbei befindet sich das Transportelement 10 in einer Übergabebestellung, welche es ermöglicht, dass die Übergabeeinrichtung 7 den Behälter 2 im Kopfbereich 13 greift und entnehmen kann. Hierzu wird das Transportelement 10 von einer Betriebsstellung in die Übergabeanstellung mit einem Hub H1 in Hubrichtung H bewegt. Nach Entnahme des Behälters 2 durch die Übergabeeinrichtung 7 erfolgt eine gegenläufige Bewegung entgegen der Hubrichtung H, wodurch das Transportelement 10 wieder zurück in die Betriebsstellung überführt wird.

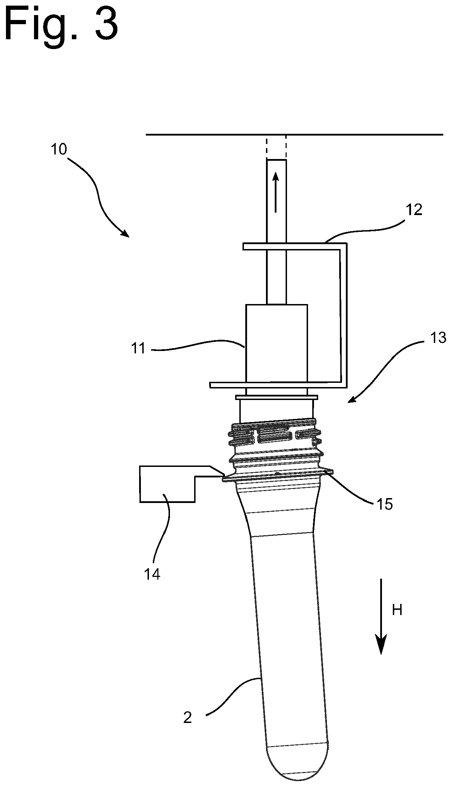

Darüber hinaus zeigt die Fig. 2 ein Abstreifelement 14, welches dazu eingerichtet ist, die Behälter 2 aus den Transportelementen 10 im Zuge einer Bewegung entgegen der Hubrichtung H zu lösen, sollte dies nicht durch die Übergabeeinrichtung 7 erfolgen. Die genaue Funktion wird insbesondere anhand der Fig. 3 deutlich.

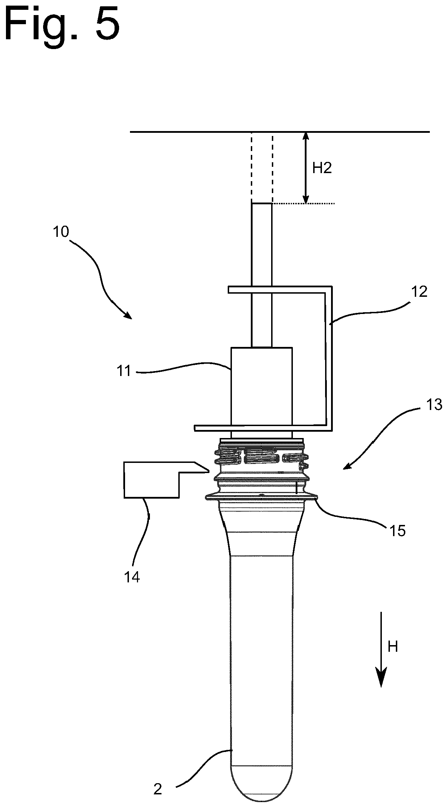

Diese Figur zeigt, wie das Transportelement 10 zurück in die Betriebsstellung überführt wird, wobei der Behälter 2 noch immer in dem Transportelement 10 angeordnet ist. Der Behälter 2 schlägt hierbei im Zuge der Bewegung in entgegengesetzter Hubrichtung H an das Abstreifelement 14 mit seinem Stützring 15 an, wodurch der Behälter 2 gelöst wird. Es ist somit erforderlich, dass in jedem Fall sichergestellt wird, dass der Behälter 2 bzw. der Stützring 15 stets unterhalb des Abstreifelementes 14 bewegt wird, sodass somit zumindest ein minimaler Hub vorgesehen sein muss, welcher im Rahmen der Erfindung als Grundhub H2 bezeichnet wird. Dieser Grundhub H2 ist in der Fig. 5 dargestellt.

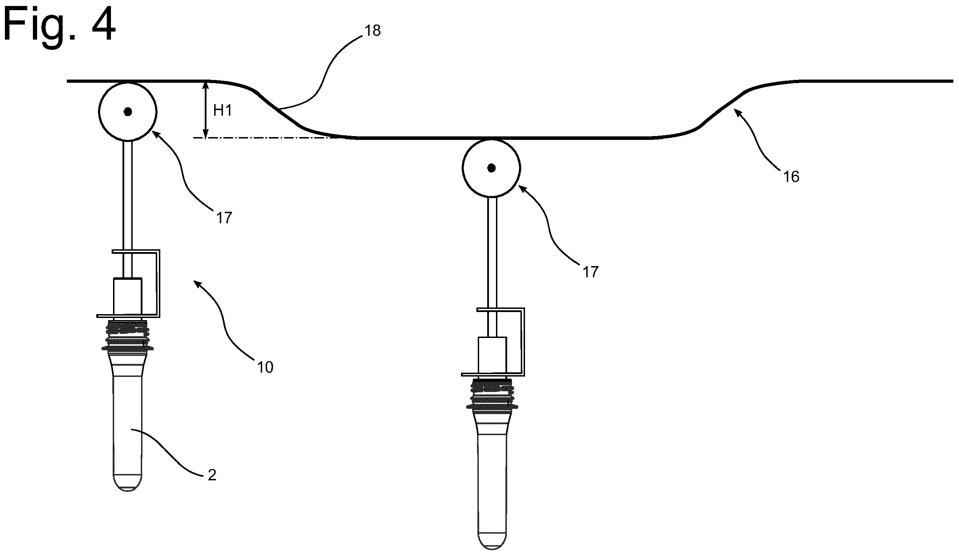

Gemäß der Fig. 4 wird die Hubbewegung über eine als Kurvensteuerung ausgebildete Hubvorrichtung bewirkt. Demnach weist jedes Transportelement 10 an einem oberen Ende eine Führungsrollenanordnung 17 auf, welche unterhalb einer Führungsbahnanordnung 16 abrollt. In einem im Übergabeabschnitt 8 verstellbar ausgebildeten Bahnabschnitt 18 ist der Bahnverlauf so ausgebildet, dass die Führungsrollenanordnung 17 in Hubrichtung H nach unten geführt wird, wobei die Transportelemente 10 den Hub H1 ausführen. Am Ende des Übergabeabschnittes 11 weist der Bahnverlauf einen umgekehrten Bahnverlauf auf.

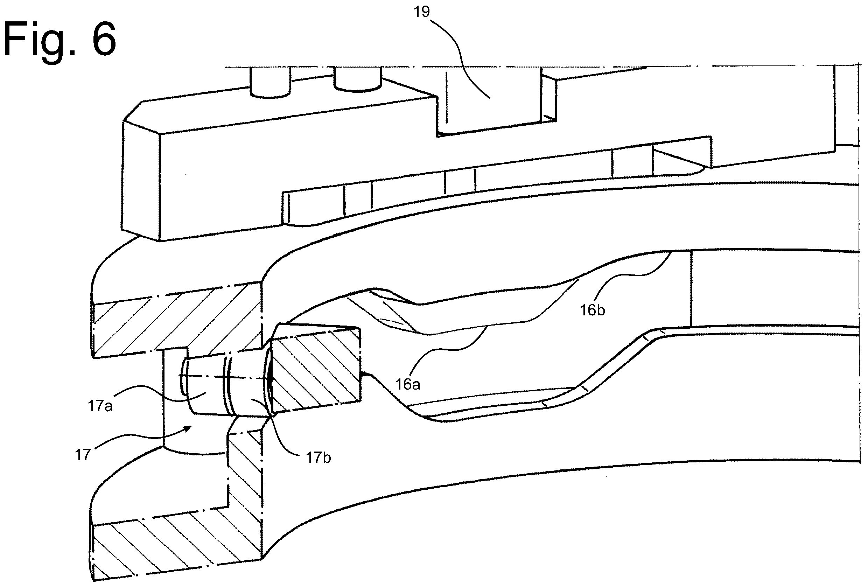

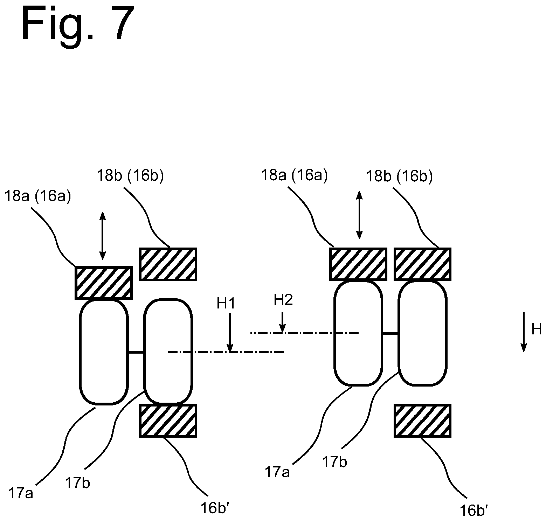

Um eine Schaltung zwischen dem Hub H1 und dem Grundhub H2 zu bewirken, ist eine Stelleinrichtung 19 vorgesehen, deren Funktion den Fig. 6 und 7 entnommen werden kann. Demnach ist die Führungsbahnanordnung 16 aus einer ersten und einer zweiten Führungsbahn 16a, 16b und die Führungsrollenanordnung 17 aus einer ersten und einer zweiten Führungsrolle 17a, 17b gebildet, wobei die erste Führungsrolle 16a entlang der ersten Führungsbahn 17a und die zweite Führungsrolle 16b entlang der zweiten Führungsbahn 17b abrollbar ist. Die beiden Führungsrollen 16a, 16b sind darüber hinaus in ihrer Drehachse miteinander verbunden. Gemäß der Fig. 7 liegt in einem ersten, links dargestellten Schaltzustand die erste Führungsrolle 17a unterhalb der ersten Führungsbahn 16a in dem verstellbar ausgebildeten Bahnabschnitt 18 an, während die zweite Führungsrolle 17b oberhalb der zweiten Führungsbahn 16b' abrollt. Durch Verstellen des Bahnabschnittes 18 wird die Führungsrollenanordnung 17 entgegen der Hubrichtung H in einen zweiten, rechts dargestellten Schaltzustand verfahren bzw. die Führungsrollenanordnung 17 vollzieht nur noch den Grundhub H2. Durch Verfahren der Führungsrollenanordnung liegt die zweite Führungsrolle 16b nunmehr unterhalb der zweiten Führungsbahn 16b an.

Durch eine solche Ausgestaltung ist es möglich, von dem Hub H1 auf einen Grundhub H2 zu wechseln, welcher kleiner ausgebildet ist als der Hub H1, welcher eine Überführung des Behälters 2 in die Übergabestellung ermöglicht. Der Grundhub H2 ist hierbei so ausgebildet, dass sichergestellt wird, dass der Behälter 2 mit seinem Stützring 15 unterhalb dem Abstreifelement 14 angeordnet ist.

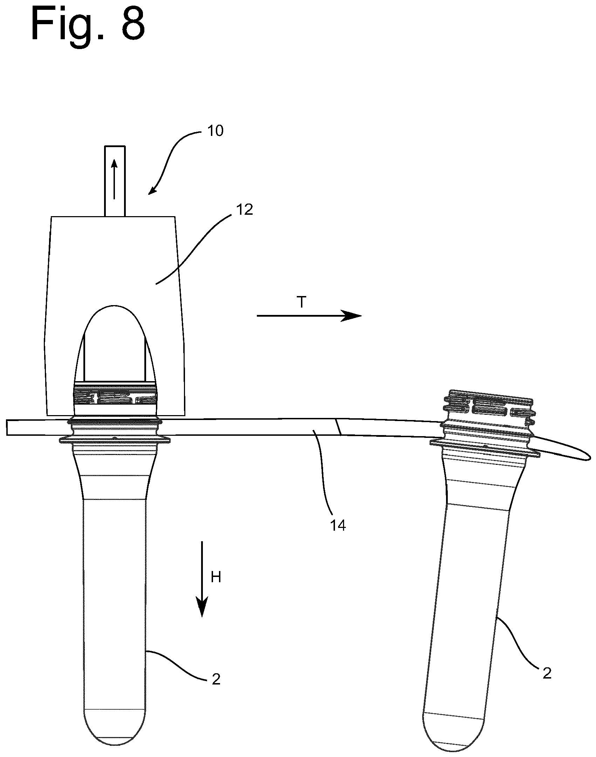

Die Fig. 8 zeigt eine seitliche Ansicht gemäß der Fig. 3, wobei deutlich wird, dass das Abstreifelement 14 in einem Endabschnitt kurvenförmig ausgebildet ist. Hierdurch wird dem in Transportrichtung T bewegten Behältern 2 nach dem Lösen von dem Transportelement 10 ein Impuls nach unten verliehen, der sicherstellt, dass die Behälter 2 schnellstmöglich nach unten befördert werden und nicht an die Trennwand 6 anschlagen.

## Patentansprüche

1. Blasformanlagenanordnung für eine Blasformanlage mit zumindest einer Behältertransporteinrichtung (5), welche eine Vielzahl umlaufend angeordneter Transportelemente (10) zur Aufnahme von Behältern (2) aufweist, welche in einer Transportrichtung (T) entlang einer Transportstrecke (9) bewegbar angeordnet sind und wobei in Transportrichtung (T) ein Übergabeabschnitt (8) an die Transportstrecke (9) anschließt, wobei eine Übergabeeinrichtung (7) dazu eingerichtet ist, die Behälter (2) in dem Übergabeabschnitt (8) aus den Transportelementen (10) zu entnehmen,
**dadurch gekennzeichnet, dass**
ein Abstreifelement (14) in Transportrichtung (T) hinter dem Übergabeabschnitt (8) angeordnet ist.

2. Blasformanlagenanordnung nach Anspruch 1, **dadurch gekennzeichnet, dass** die Behältertransporteinrichtung (5) eine Hubeinrichtung aufweist, welche dazu eingerichtet ist, die Transportelemente (10) in dem Übergabeabschnitt (8) ausgehend von einer Betriebsstellung in einer senkrecht zur Transportrichtung (T) angeordneten Hubrichtung (H) zu bewegen.

3. Blasformanlagenanordnung nach Anspruch 2, **dadurch gekennzeichnet, dass** das Abstreifelement (14) dazu eingerichtet ist, die Behälter (2) aus den Transportelementen (10) im Zuge einer Bewegung entgegen der Hubrichtung (H) zu lösen.

4. Blasformanlagenanordnung nach Anspruch 2 oder 3, **dadurch gekennzeichnet, dass** die Hubeinrichtung dazu eingerichtet ist, die Transportelemente (10) in dem Übergabeabschnitt (8) zumindest entlang eines Grundhubes (H2) zu bewegen, wobei der Grundhub (H2) zumindest 8 mm beträgt.

5. Blasformanlagenanordnung nach einem der Ansprüche 1 bis 4, **dadurch gekennzeichnet, dass** das Abstreifelement (14) zumindest abschnittsweise kurvenförmig ausgebildet ist.

6. Blasformanlagenanordnung nach einem der Ansprüche 2 bis 5, **dadurch gekennzeichnet, dass** der Hubeinrichtung eine Stelleinrichtung (19) zur Einstellung des Hubes zugeordnet ist.

7. Blasformanlagenanordnung nach einem der Ansprüche 2 bis 6, **dadurch gekennzeichnet, dass** die Hubeinrichtung als Kurvensteuerung ausgebildet ist, wobei eine an dem Transportelement (10) angeordnete Führungsrollenanordnung (17) entlang einer zugeordneten Führungsbahnanordnung (16) in Transportrichtung (T) abrollbar ist und wobei insbesondere die Führungsbahnanordnung (16) im Übergabeabschnitt (8) einen über die Stelleinrichtung (19) einstellbaren Bahnverlauf aufweist.

8. Blasformanlagenanordnung nach Anspruch 7, **dadurch gekennzeichnet, dass** die Führungsrollenanordnung (17) aus zumindest zwei Führungsrollen (17a, 17b) und die Führungsbahnordnung (16) aus zumindest zwei Führungsbahnen (16a, 16b) gebildet ist, wobei eine erste Führungsbahn (16a) einen über die Stelleinrichtung (19) in Hubrichtung (H) verstellbaren Bahnabschnitt (18; 18a) aufweist.

9. Blasformanlagenanordnung nach einem der Ansprüche 1 bis 8, **dadurch gekennzeichnet, dass** die Behältertransporteinrichtung (5) als Heizvorrichtung ausgebildet ist, wobei zumindest abschnittsweise entlang der Transportstrecke (9) Heizelemente (6) angeordnet sind.

10. Blasformanlagenanordnung nach einem der Ansprüche 1 bis 9, **dadurch gekennzeichnet, dass** die Übergabeeinrichtung (7) einen oder mehrere Greifer aufweist, welche dazu eingerichtet sind, die Behälter (2) in dem Übergabeabschnitt (8) zu greifen.

11. Blasformanlagenanordnung nach Anspruch 10, **dadurch gekennzeichnet, dass** die Übergabeeinrichtung (7) einen rotierbar angetriebenen Grundkörper aufweist, wobei mehrere Greifer in Umfangsrichtung an dem Grundkörper angeordnet sind.

12. Blasformanlagenanordnung nach einem der Ansprüche 1 bis 11, **dadurch gekennzeichnet, dass** der Behältertransporteinrichtung (13) und/oder der Übergabeeinrichtung (7) eine Antriebseinrichtung zugeordnet ist.

13. Blasformanlagenanordnung nach Anspruch 12, **dadurch gekennzeichnet, dass** die Antriebseinrichtung ein Elektromotor, insbesondere ein Servo-Motor, ist.

14. Blasformanlagenanordnung nach Anspruch 12 oder 13, **dadurch gekennzeichnet, dass** in Transportrichtung (T) hinter dem Abstreifelement (14) ein Notschalter angeordnet ist, wobei eine Steuerungseinrichtung dazu eingerichtet ist, bei Kontakt mit einem Behälter (2) die Antriebseinrichtung der Behältertransporteinrichtung (5) anzuhalten.

15. Blasformanlage mit einer Blasformanlagenanordnung nach einem der Ansprüche 1 bis 14, wobei eine Blasmaschine (1) der Behältertransporteinrichtung (5) nachgeschaltet ist und wobei eine Übergabeeinrichtung (7) zur Übergabe der Behälter (2) zwischen der Behältertransporteinrichtung (5) und der Blasmaschine (1) angeordnet ist.
